(19) Europäisches Patentamt

European Patent Office

Office européen des brevets

(11) **EP 0 924 544 A2**

(12) **EUROPEAN PATENT APPLICATION**

(43) Date of publication:
23.06.1999 Bulletin 1999/25

(51) Int. Cl.⁶: $G02B\ 7/28$

(21) Application number: 98117826.2

(22) Date of filing: 21.09.1998

(84) Designated Contracting States:
AT BE CH CY DE DK ES FI FR GB GR IE IT LI LU
MC NL PT SE
Designated Extension States:
AL LT LV MK RO SI

(30) Priority: 15.12.1997 KR 9768882

(71) Applicant:
SAMSUNG ELECTRONICS CO., LTD.
Suwon-City, Kyungki-do (KR)

(72) Inventor: Lee, Ho-Seong
Dongjak-gu, Seoul (KR)

(74) Representative:
Grünecker, Kinkeldey,
Stockmair & Schwanhäusser
Anwaltssozietät
Maximilianstrasse 58
80538 München (DE)

(54) **Auto-focusing apparatus and method**

(57) An auto-focusing apparatus of a camera system and a corresponding method are provided. The camera system includes a focusing unit with changeable focus position. A means for generating a plurality of focusing values, which has a plurality of filters, calculates the plurality of focusing values for video signals. Each of the plurality of filters has a frequency characteristic different from each other. A controller controls the focusing unit on the basis of the plurality of focusing values output by said means.

FIG. 5

## Description

The invention relates to a camera system, and more particularly, to an auto-focusing apparatus and method for a camera system.

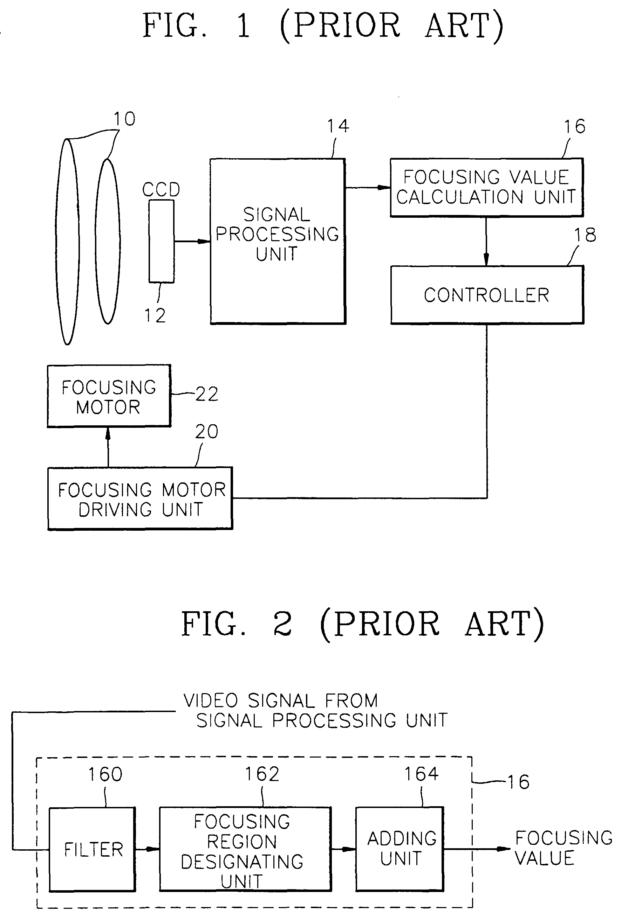

A typical auto-focusing method used for a camera system such as a camcorder is a mountain climbing method. The mountain climbing method is a method where frequency components of a video signal output by a CCD is detected, and then a focus lens is moved in the direction which produces more high-frequency components. This conventional method and the corresponding apparatus will now be described with reference to Figs. 1 to 4.

FIG. 1 is a block diagram of a conventional auto-focusing apparatus employing the mountain climbing method. The apparatus includes a focus lens 10, a pickup device 12, a signal processing unit 14, a focusing value calculation unit 16, a controller 18, a focusing motor driving unit 20 and a focusing motor 22.

The focusing motor driving unit 20 drives the focusing motor 22 according to a predetermined control signal, and the focus lens 10 moves back and forth according to an operation of the focusing motor 22. The pickup device 12, which typically includes a charge coupled device (CCD), picks up a video signal which varies according to the position of the focus lens 10. The signal processing unit 14 processes the video signal picked up by the pickup device 12.

The focusing value calculation unit 16 calculates a focusing value of the video signal output by the signal processing unit 14. The focusing value is obtained by applying a predetermined frequency band for the video signals which are output by the signal processing unit 14, and then adding only the video signals in the applied frequency band in a unit of a frame or a field.

The controller 18 determines the direction of movement of the focus lens 10 according to the focusing value output by the focusing value calculation unit 16 and controls the focusing motor driving unit 20. That is, the controller 18 compares a previous focusing value with a current focusing value, and then outputs a control signal for controlling the focusing motor driving unit 20 so that the focus lens 10 moves in the direction of a greater focusing value, i.e., in the direction resulting in more high frequency components in the video signals.

Therefore, the focusing apparatus of FIG. 1 automatically repeats the operation of moving the focus lens 10 a little, comparing the previous focusing value with the current focusing value, and then moving the focus lens 10 to a position having a larger focusing value. As a result, this operation automatically controls the focus.

FIG. 2 shows an example of the focusing value calculation unit of FIG. 1. The focusing calculation unit 16 of FIG. 2 includes a filter 160, a focusing region designating unit 162, and an adding unit 164. The filter 160 selectively passes only a predetermined frequency band of video signals output by the signal processing unit 14. The focusing region designating unit 162 passes only components of the video signals passed through the filter 160 which correspond to a predetermined spacial region in the field or the frame. The adding unit 164 adds the video signals of each frame or field output by the focusing region designating unit 162. Particularly, the focusing region designating unit 162, which is optionally included, enables a focusing on a most significant focus when the image has a multiplicity of focuses.

The video signals picked up by the image pickup device 12 may include various types of images, such as a dark image, a bright image, an image having more high frequency components, and an image having more low frequency components. Particularly, video signals picked up under special circumstances, e.g., a candle flame against a dark background, or a street lamp in a dark street, are referred to as spotting images.

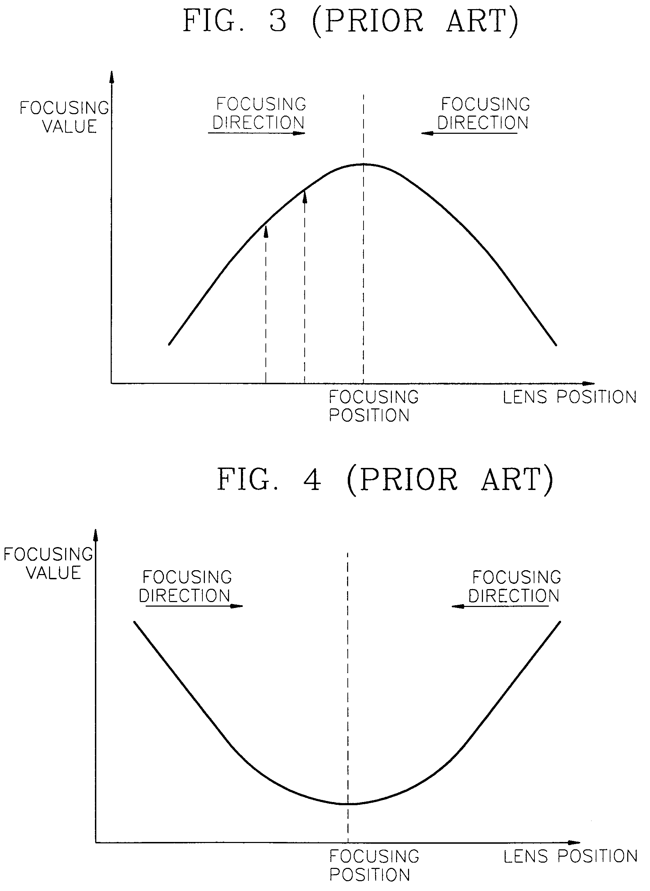

In the spotting image, the focus becomes blurred and the bright area of the light is spread, increasing the area the light occupies in the whole image. The edge of the light has high frequency components, so that frequency characteristics of the spotting image is the opposite of those of a usual image as may be seen from Figs. 3 and 4.

FIG. 3 is a graph showing the change of the focusing value according to the position of a lens when the lens picks up a usual image. FIG. 4 is a graph showing the change of the focusing value according to the position of the lens when the lens picks up a spotting image.

Thus, in the conventional auto-focusing apparatus, high frequency components of certain images such as the spotting image increase in the direction of defocusing, which may cause an incorrect focusing. This may cause a malfunction of the auto-focusing apparatus.

It is therefore the object of the invention to provide an auto-focusing apparatus and method which operate more reliably.

This object is solved by the subject matters of independent claims 1 and 10.

The invention is advantageous in particular when applied to special video signals such as a spotting image signal.

Preferred embodiments are defined by the dependent claims.

The invention will become more apparent from the following description with reference to the attached drawings in which:

    FIG. 1 is a block diagram of a conventional auto-focusing apparatus;
    FIG. 2 is a diagram of an example of a focusing value calculation unit of FIG. 1;
    FIG. 3 is a graph showing the relationship between the focusing value and the lens position when the lens picks up a usual image;

FIG. 4 is a graph showing the corresponding relationship when the lens picks up a spotting image;

FIG. 5 is a block diagram of a focusing value calculation unit according to a preferred embodiment of the invention;

FIG. 6 is a flowchart of an auto-focusing method according to a preferred embodiment of the invention;

FIG. 7 illustrates the frequency characteristics of first and second filters of FIG. 5;

FIG. 8 is a graph showing the dependencies of first and second focusing values on the lens position when the lens picks up a usual image;

FIG. 9 is a graph showing the corresponding dependencies when the lens picks up a spotting image;

FIG. 10 is a graph showing the dependency of a third focusing value on the lens position when the lens picks up a usual image;

FIG. 11 is a graph showing the corresponding dependency when the lens picks up a spotting image; and

FIG. 12 is a graph for explaining the definitions of rates of change of the first and second focusing values in the invention.

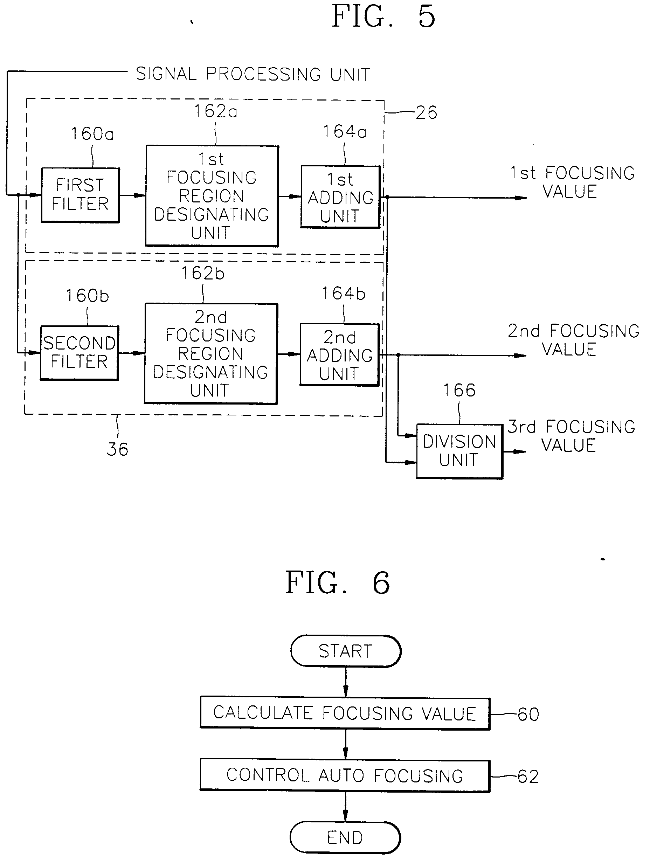

Referring to FIG. 5, the focusing value calculation unit of the preferred embodiment includes first and second focusing value calculation circuits 26 and 36, and a division unit 166.

The first focusing value calculation circuit 26 includes a first filter 160a, a first focusing region designating unit 162a and a first adding unit 164a. The first filter 160a selectively passes only a predetermined frequency band of video signals output by the signal processing unit. The first focusing region designating unit 162a passes only components of the video signals passed through the filter 160a which correspond to a predetermined spacial region in the field or frame so that the focusing is carried out for a most significant focus when the image has a multiplicity of focuses. The first adding unit 164a adds the video signals of each field or frame output by the first focusing region designating unit 162a and outputs a first focusing value.

The second focusing value circuit 36 is arranged accordingly and includes a second filter 160b, second focusing region designating unit 162b and second adding unit 164b. The second filter 160b has a passband different from that of the first filter 160a. The second adding unit 164b outputs a second focusing value.

The division unit 166 divides the second focusing value by the first focusing value and outputs the divided result as a third focusing value.

The operation of the apparatus of FIG. 5 will now be described in detail with reference to FIG. 6 which shows the auto-focusing method according to a preferred embodiment of the invention. The method generally includes a focusing value calculation step 60 and an auto-focusing step 62. In the focusing value calculation step 60, the input video signals are filtered by the first and second filters 160a and 160b which have a passband different from each other. When the filtered video signal has multiple focuses, video signals corresponding to a predetermined spacial region on a screen are passed by the first and second focusing region designating units 162a and 162b. The video signals are then added by the first and second adding units 164a and 164b in a unit of a field or frame, thereby resulting in first and second focusing values. Afterwards, the third focusing value is calculated by the division unit 166 by dividing the second focusing value by the first focusing value.

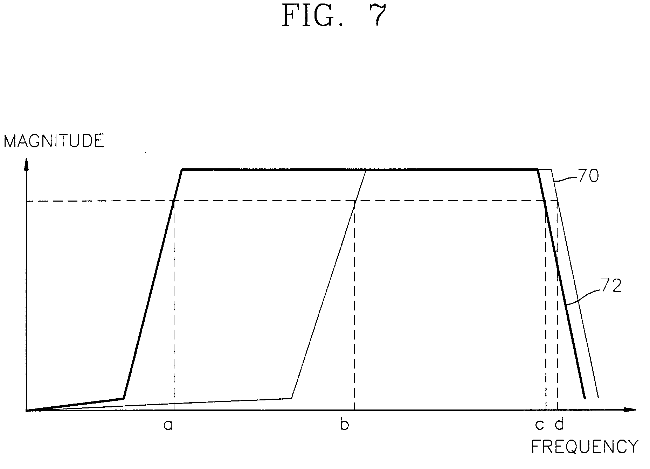

FIG. 7 illustrates the frequency characteristics of the first and second filters 160a and 160b. In FIG. 7, reference numeral 70 denotes a frequency passband of the first filter 160a, and reference numeral 72 denotes a frequency passband of the second filter 160b. As shown in FIG. 7, the second filter 160b has a wider passband than the first filter 160a. Also, the passband 72 of the second filter 160b extends from the passband 70 of the first filter 160a towards the low frequency region. The specific cutoff frequencies a, b, c, and d in FIG. 7 may be varied according to particular applications or the intention of a designer.

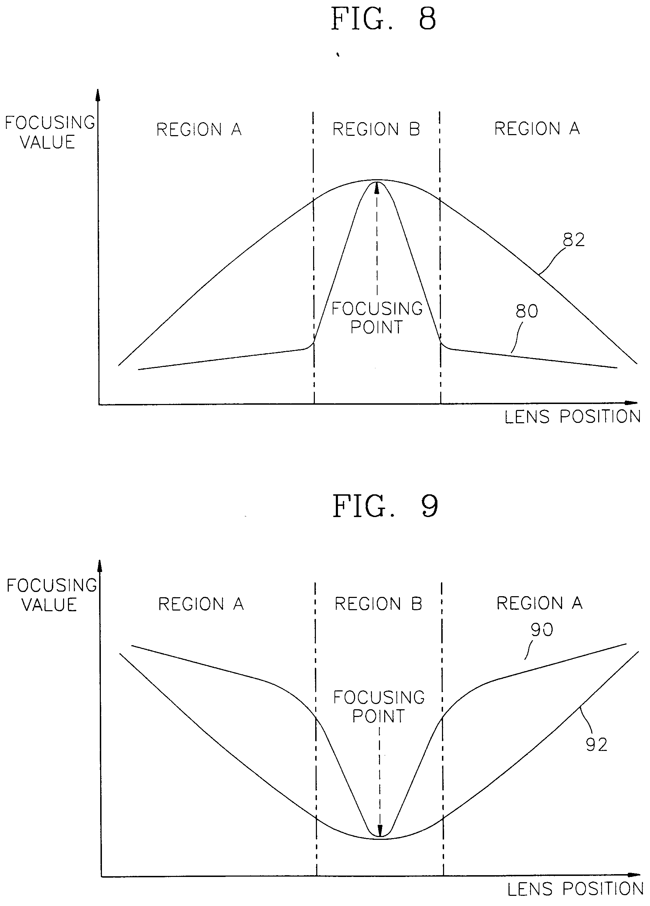

FIG. 8 is a graph showing the dependencies of the first and second focusing values on the lens position when the lens picks up a usual image. In FIG. 8, reference 80 denotes characteristics of the first focusing value, which depends on the filter characteristics the first filter 160a. Reference numeral 82 denotes characteristics of the second focusing value, which depends on the filter characteristics the second filter 160b.

FIG. 9 is a graph showing the dependencies of the first and second focusing values on the lens position when the lens picks up a spotting image. In FIG. 9, reference numeral 90 denotes characteristics of the first focusing value, and reference numeral 92 denotes characteristics of the second focusing value.

In FIGS. 8 and 9, region A denotes a region where the magnitude of the rate of change of the first focusing value is lower than the magnitude of the rate of change of the second focusing value. Accordingly, region B denotes a region where the magnitude of the rate of change of the first focusing value is higher than the magnitude of the rate of change of the second focusing value. Such characteristics of regions A and B are the same regardless of the usual image and the spotting image. In the invention, the third focusing value is calculated such that it represents a characteristic which is common to the usual image and the spotting image.

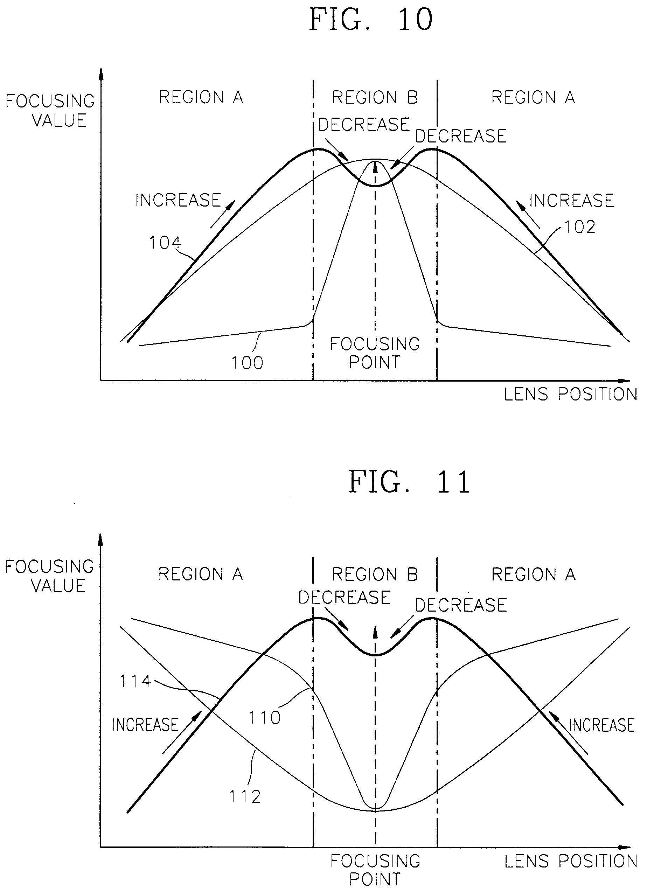

FIG. 10 is a graph showing the dependency of the third focusing value on the lens position when the lens picks up a usual image, and FIG. 11 is the corresponding graph when the lens picks up a spotting image.

In FIGS. 10 and 11, reference numerals 100 and 110 denote characteristics of the first focusing value, reference numerals 102 and 112 denote characteristics of the second focusing value, and reference numerals 104 and 114 denote characteristics of the third focusing value.

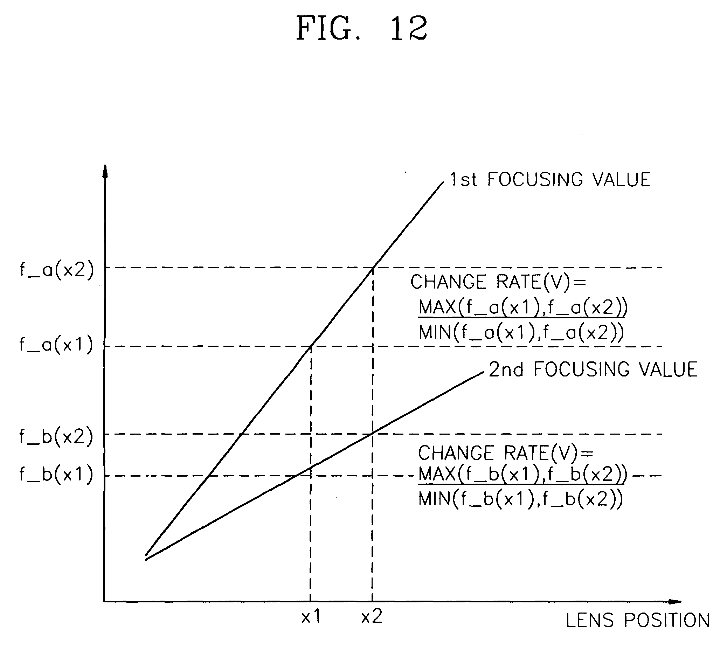

As shown in FIGS. 10 and 11, the third focusing value has the same characteristics regardless of if the image is the usual image or the spotting image. That is, when a lens moves from an arbitrary end to the other end, the focusing region can be divided into two regions according to movement of the lens: region A where the rate of change of the first focusing value is lower than that of the second focusing value, and region B where the rate of change of the first focusing value is higher than that of the second focusing value. Here, since the ranges of the first and second focusing values may be different from each other, it is inappropriate to define the rates of change of the focusing values as the changes of the focusing values with respect to the lens movement. Thus, the rate of change of the focusing values are defined as in FIG. 12.

FIG. 12 is a graph for explaining definitions of rates of change of first and second focusing values according to the invention. The rate of change is calculated by the ratio of the maximum of the focusing values at two lens position to the minimum of the focusing values, as follows:

$$\text{change rate} = \frac{MAX(f(x1), f(x2))}{MIN(f(x1), f(x2))} \quad (1)$$

Here, MAX() is a function which returns the maximum of its input values, MIN() is a function which returns the minimum of its input values, arguments x1 and x2 denote positions of the focus lens, and f() denotes the focusing value. In FIG. 12, f_a() and f_b() denote the first and second focusing values, respectively.

In the auto-focusing step 62 of FIG. 6, the movement direction of the focus lens is determined using the third focusing value obtained from the focusing value calculation step 60, and the focus lens motor is driven accordingly. That is, in region A where the rate of change of the second focusing value is greater than the rate of change of the first focusing value, the focusing is performed in the direction toward which the third focusing value increases. Accordingly, in region B where the rate of change of the second focusing value is smaller than the rate of change of the first focusing value, the focusing is performed in the direction toward which the third focusing value decreases.

Since the characteristics of the third focusing value are the same both for a usual image and a special image and the focusing region may be divided into regions A and B in the same manner for both the usual and special images, auto-focusing can be carried out without a malfunction even for a special image.

Even though the third focusing value is obtained by dividing the second focusing value by the first focusing value in the preferred embodiment, the third focusing value may also preferably be obtained by dividing the first focusing value by the second focusing value. In such an embodiment of the invention, the third focusing value has a characteristic similar to the value in the embodiment described above and can be used to perform the auto-focusing in the same manner as in that embodiment. That is, in regions A and B the focusing is performed in the direction toward which the third focusing value decreases or increases, respectively.

Further, in another preferred embodiment of the invention, the first and second focusing region designating units 162a and 162b may be disposed before the first and second filters 160a and 160b. In such an embodiment, the received video signals are gated by the designating units, and then the gated video signals are filtered. Thus, the amount of image data to be filtered is reduced.

In yet another embodiment of the invention, the first and second focusing region designating units 162a and 162b may preferably not be employed at all.

According to the auto-focusing apparatus and method of the invention, special video signals as well as usual video signals generate auto-focusing values showing the same output characteristics, and auto-focusing is performed through the generated focusing value, to thereby perform normal auto-focusing without a malfunction.

**Claims**

1. An auto-focusing apparatus of a camera system which receives video signals, the camera system including a focusing unit with changeable focus position, the apparatus comprising:

   means for generating a plurality of focus values from the video signals, said means having a plurality of filters, each filter having a frequency characteristic different from each other ; and a controller for controlling the focus on basis of the plurality of focusing values.

2. The apparatus according to claim 1 wherein the focusing unit includes a focus lens and a focusing motor for moving focus lens, and wherein the controller is arranged to control the focusing motor to move the focus lens and determine a movement direction.

3. The auto-focusing apparatus of claim 1, wherein the means comprises:

a first focusing value calculation unit for adding only received video signals in a first frequency band to calculate a first focusing value;

a second focusing value calculation unit for adding only received video signals in a second frequency band which is wider than the first frequency band to calculate a second focusing value; and

a third focusing value calculation unit for dividing one of the first and second focusing values by the other to calculate a third focusing value.

4. The auto-focusing apparatus of claim 3, wherein a lower cutoff frequency of the second frequency band is lower than a lower cutoff frequency of the first frequency band.

5. The auto-focusing apparatus of claim 3, wherein the first focusing value calculation unit comprises:

a first filter for bandpass-filtering only the received video signals of the first frequency band to thereby generate first-filtered signals; and
a first adding unit for adding the first-filtered signals to calculate a first focusing value, and

the second focusing value calculation unit comprises:

a second filter for bandpass-filtering only the received video signals of the second frequency band to thereby generate second-filtered signals; and
a second adding unit for adding the second-filtered signals to calculate a second focusing value.

6. The auto-focusing apparatus of claim 3, wherein the first focusing value calculation unit comprises:

a first filter for bandpass-filtering only the received video signals of the first frequency band to generate first-filtered signals;
a first focusing region designating unit for extracting only video signals corresponding to pixels of a predetermined pixel region from the first-filtered signals and outputting the extracted video signals; and
a first adding unit for adding the extracted video signals to calculate the first focusing value, and

the second focusing value calculation unit comprises:

a second filter for bandpass-filtering only the received video signals of the second frequency band to generate second-filtered signals;

a second focusing region designating unit for extracting only video signals corresponding to pixels of a predetermined pixel region from the second-filtered signals, and outputting the extracted video signal; and
a second adding unit for adding the extracted video signals to calculate the second focusing value.

7. The auto-focusing apparatus of claim 3, wherein the first focusing value calculation unit comprises:

a first focusing region designating unit for extracting only video signals corresponding to pixels of a predetermined pixel region from the video signals and outputting the extracted video signals;
a first filter for bandpass-filtering only the video signals extracted from the first focusing region designating unit of the first frequency band to generate a first-filtered signal; and
a first adding unit for adding the first-filtered signals to calculate the first focusing value, and

the second focusing value calculation unit comprises:

a second focusing region determining unit for extracting only video signals corresponding to pixels of a predetermined pixel region from the video signals, and outputting the extracted video signals;
a second filter for bandpass-filtering only the video signals extracted from the second focusing region designating unit of the second frequency band to generate a second-filtered signal; and
a second adding unit for adding the second-filtered signals to calculate the second focusing value.

8. The auto-focusing apparatus of claim 3, wherein the third focusing value is obtained by dividing the second focusing value by the first focusing value.

9. The auto-focusing apparatus of claim 3, wherein the third focusing value is obtained by dividing the first focusing value by the second focusing value.

10. An auto-focusing method for a camera system which receives video signals, the camera system including a focusing unit with changeable focus position, the method comprising the steps of:

(a) adding only received video signals of a first frequency band to calculate a first focusing value;
(b) adding only the received video signals of a second frequency band which is wider than the first frequency band to calculate a second focusing value;

(c) dividing one of the first and second focusing values by the other to calculate a third focusing value; and

(d) controlling the focusing motor according to the rates of change of the first and second focusing values and the increase or decrease of the third focusing value to move the focus lens.

11. The auto-focusing method of claim 10, wherein a lower cutoff frequency of the second frequency band is lower than a lower cutoff frequency of the first frequency band.

12. The auto-focusing method of claim 10, wherein the step (a) comprises the steps of:

   (a1) filtering only the received video signals of the first frequency band to generate first-filtered signals; and
   (a2) adding the first-filtered signals to calculate a first focusing value, and

the step (b) comprises the substeps of:

   (b1) filtering only the received video signals of the second frequency band to generate second-filtered signals; and
   (b2) adding the second-filtered signals to calculate a second focusing value.

13. The auto-focusing method of claim 10, further comprising the step of setting a gating region including only a predetermined pixel region so that only the predetermined pixel region is reflected in calculating the first and second focusing values.

14. The auto-focusing method of claim 13, wherein the step (a) comprises the substeps of:

   (a1) filtering only the received video signals of the first frequency band to generate first-filtered signals; and
   (a2) adding only the first-filtered signals corresponding to the gating region to calculate a first focusing value, and

the step (b) comprises the substeps of:

   (b1) filtering only the received video signals of the second frequency band to generate second-filtered signals; and
   (b2) adding only the second-filtered signals corresponding to the gating region to calculate a second focusing value.

15. The auto-focusing method of claim 13, wherein the step (a) comprises the steps of:

   (a1) extracting only the received video signals corresponding to the gating region;
   (a2) filtering only the signals extracted in the step (a1) of the first frequency band to generate first-filtered signals; and
   (a3) adding the first-filtered signals to calculate a first focusing value, and

the step (b) comprises the substeps of:

   (b1) extracting only the received video signals corresponding to the gating region;
   (b2) filtering only the signals extracted in the step (b1) of the second frequency band to generate second-filtered signals; and
   (b3) adding the second-filtered signals to calculate a second focusing value.

16. The auto-focusing method of claim 10, wherein in the step (c), the third focusing value is obtained by dividing the second focusing value by the first focusing value.

17. The auto-focusing method of claim 15, wherein in the step (d), if the rate of change of the first focusing value is higher than that of the second focusing value, the focus lens is moved in the direction of reducing the third focusing value, and if the rate of change of the first focusing value is lower than that of the second focusing value, the focus lens is moved in the direction of increasing the third focusing value.

18. The auto-focusing method of claim 10, wherein in the step (c), the third focusing value is obtained by dividing the first focusing value by the second focusing value.

19. The auto-focusing method of claim 17, wherein in the step (d), if the rate of change of the first focusing value is higher than that of the second focusing value, the focus lens is moved in the direction of increasing the third focusing value, and if the rate of change of the first focusing value is lower than that of the second focusing value, the focus lens is moved in the direction of reducing the third focusing value.

# FIG. 1 (PRIOR ART)

# FIG. 2 (PRIOR ART)

FIG. 3 (PRIOR ART)

FOCUSING
VALUE

FOCUSING
DIRECTION

FOCUSING
DIRECTION

FOCUSING
POSITION

LENS POSITION

FIG. 4 (PRIOR ART)

FOCUSING
VALUE

FOCUSING
DIRECTION

FOCUSING
DIRECTION

FOCUSING
POSITION

LENS POSITION

# FIG. 5

SIGNAL PROCESSING UNIT

— 26

160a

FIRST FILTER

162a

1st FOCUSING REGION DESIGNATING UNIT

164a

1st ADDING UNIT

1st FOCUSING VALUE

160b

SECOND FILTER

162b

2nd FOCUSING REGION DESIGNATING UNIT

164b

2nd ADDING UNIT

2nd FOCUSING VALUE

36

166

DIVISION UNIT

3rd FOCUSING VALUE

# FIG. 6

START

CALCULATE FOCUSING VALUE — 60

CONTROL AUTO FOCUSING — 62

END

FIG. 7

## FIG. 8

## FIG. 9

FIG. 10

FIG. 11

# FIG. 12

- 1st FOCUSING VALUE

$$\text{CHANGE RATE}(V)=\frac{\text{MAX}(f\_a(x1),f\_a(x2))}{\text{MIN}(f\_a(x1),f\_a(x2))}$$

- 2nd FOCUSING VALUE

$$\text{CHANGE RATE}(V)=\frac{\text{MAX}(f\_b(x1),f\_b(x2))}{\text{MIN}(f\_b(x1),f\_b(x2))}$$

f_a(x2)

f_a(x1)

f_b(x2)

f_b(x1)

x1  x2

LENS POSITION

EP 0 924 544 A2